# EUROPÄISCHE PATENTANMELDUNG

(11) **EP 0 955 532 A2**
(43) Veröffentlichungstag der Anmeldung: **10.11.1999**
(21) Anmeldenummer: 99109103.4
(22) Anmeldetag: 07.05.1999
(51) Int. Cl.: G01M 17/02, G01N 21/88

(54) **Optoelektronisches Strukturfestigkeitsprüfverfahren mit Störungserkennung**

(30) Priorität: 07.05.1998 EP 98108368
(71) Anmelder: NOVA C.O.R.D. AG, 9494 Schaan (LI)
(72) Erfinder: Rottenkolber, Hans Dr., 83123 Amerang (DE)
(74) Vertreter: Hano, Christian, Dipl.-Ing.

(57) **Zusammenfassung**

Bei einem Verfahren zur Ermittlung der Strukturfestigkeit eines Prüfobjektes mit diffus streuender Oberfläche wird das Prüfobjekt mit kohärentem Licht beleuchtet, die vom Prüfobjekt zurückgestreute Strahlung in einem Zweistrahl-Interferometer in zwei Teilstrahlungen aufgeteilt, in dem Zweistrahl-Interferometer die eine der beiden Teilstrahlungen gegen die andere Teilstrahlung verkippt (Shearing), in dem Zweistrahl-Interferometer eine der beiden Teilstrahlungen schrittweise phasenverschoben, die von dem Prüfobjekt zurückgestreute und in dem Zweistrahl-Interferometer in die zwei Teilstrahlungen aufgeteilte und wieder zusammengeführte Strahlung durch die Oberfläche des Prüfobjektes abbildende Komponenten einem elektronischen Bildsensorsystem zugeführt, die von dem Bildsensorsystem abgegebenen Signale digitalisiert und in einem Bildverarbeitungssystem zu einem Modulo-2π-Bild weiterverarbeitet, das Modulo-2π-Bild zu einem Ausgangs-Grauwertbild verstetigt und das Ausgangs-Grauwertbild zu einem in Bezug auf die Strukturfestigkeit des Prüfobjekts auswertbaren Bewertungs-Grauwertbild weiterverarbeitet. Dabei wird das Ausgangs-Grauwertbild vor seiner Weiterverarbeitung zum Bewertungs-Grauwertbild auf Anzeichen einer Störung untersucht. Bei bei Erkennung einer Störung werden die vorhergehenden Verfahrensschritte wiederholt.

## Beschreibung

Die Erfindung betrifft ein Verfahren zur Ermittlung der Strukturfestigkeit eines Prüfobjektes mit diffus streuender Oberfläche nach dem Oberbegriff des Anspruchs 1.

Ein solches, aus der EP 0 823 623 A1 bekanntes, optoelektronisches Verfahren hat eine interferometrische Empfindlichkeit in der Größenordnung eines Bruchteils einer Wellenlänge des benutzten Meßlichtes (500-900 nm). Da beim Shearingverfahren geometrisch benachbarte Gebiete verglichen werden, ist das gattungsgemäße Verfahren relativ unempfindlich gegenüber äußeren Störungen. Trotzdem kann es z.B. bei starken Vibrationen der Prüfvorrichtung, durch auf die Prüfvorrichtung scheinendes Sonnenlicht o.ä., dazu kommen, daß die dem Bildsensorsystem zugeführte Strahlung inkohärent ist. In diesem Fall führt die Modulo-2π-Bildverarbeitung zu einem Ausgangs-Grauwertbild, daß für eine weitere Verarbeitung unbrauchbar ist.

Der Erfindung liegt die Aufgabe zugrunde, ein Verfahren zur Ermittlung der Strukturfestigkeit eines Prüfobjektes mit diffus streuender Oberfläche bereitzustellen, daß eine sichere Erkennung von Reifendefekten gewährleistet.

Diese Aufgabe wird erfindungsgemäß durch ein Verfahren mit den Merkmalen des Patentanspruchs 1 gelöst.

Durch die Untersuchung des Ausgangs-Grauwertbildes auf Störungsanzeichen und die vom Ergebnis dieser Untersuchung abhängige Weiterführung des Verfahrens, d.h. entweder Weiterverarbeitung des Ausgangs-Grauwertbildes zum resultierenden Grauwertbild, oder Abbruch der Bildverarbeitung und Wiederholung der Bildaufnahme, wird sichergestellt, daß das Bewertungs-Grauwertbild auf einer im wesentlichen störungsfreien Prüfung beruht.

Vorteilhafte und bevorzugte Weiterentwicklungen des erfindungsgemäßen Verfahrens sind Gegenstand der Ansprüche 2 bis 5.

Ausführungsbeispiele des erfindungsgemäßen Verfahrens werden nachfolgend anhand von Figuren erläutert. Es zeigt:
- Fig. 1: im Querschnitt schematisch den Schulterbereich eines LKW-Reifens;
- Fig. 2: eine teilweise Seitenansicht des Reifens von Fig. 1, die einen Prüfabschnitt mit einem Normierungsstreifen zeigt
- Fig. 3: ein Ausgangs-Grauwertbild mit marmorähnlichem Muster, wie es auf der Grundlage einer durch zu starke Störungen beeinflußten Prüfung erhalten wird,
- Fig. 4: schematisch die toraidale und radiale Segmentierung des Reifens.

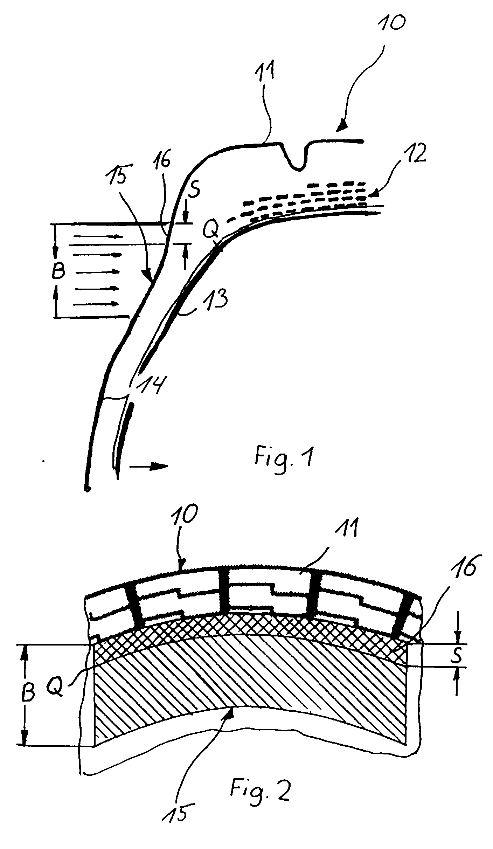

Fig. 1 zeigt schematisch den Querschnitt eines zu prüfenden LKW-Reifens 10 mit einer typischerweise Stahlgewebe enthaltenden Karkasse 13, einer Lauffläche 11 sowie einem zwischen der Karkasse 13 und der Lauffläche 11 angeordneten Gürtelpaket 12. In Fig. 2 ist ein bezüglich der Reifenachse kreisbogenförmiger Prüfabschnitt 15 der Seitenwand 14 des LKW-Reifens 10 gezeigt, dessen oberer Rand sich im Bereich des Übergangs zwischen Karkasse 13 und Gürtelpaket 12 befindet.

Zur Überprüfung des Prüfbereichs 15 auf einen Fehler wird der Prüfbereich 15 zunächst mittels des aus der DE-OS-42 31 578 A1 bekannten Verfahrens geprüft, bei dem wenigstens eine Laserdiode zur Beleuchtung verwendet wird und das Shearing in radialer Richtung des LKW-Reifens, d.h. in Fig. 2 von oben nach unten oder umgekehrt erfolgt. Die Verformung erfolgt dadurch, daß der Reifendruck vermindert oder erhöht wird, wodurch die Seitenwand 14 des Reifens um eine Linie Q im Übergangsbereich zwischen Karkasse 13 und Gürtelpaket 12 nach innen bewegt wird. Die Verformung entspricht deswegen annähernd der Verformung eines einseitig eingespannten Trägers.

Es wird ein Modulo-2π-Bild gewonnen, das so in ein Ausgangs-Grauwertbild umgesetzt wird, daß die Grauwerte der einzelnen Bildpunkte die Differenz der Verformung zweier Punkte auf dem Prüfobjekt angeben, die auf einer Radialen bzw. auf zur Radialen parallel Geraden benachbart sind. Hierfür geeignete Entfaltungsmethoden sind zum Beispiel beschrieben in "Digitale Verarbeitung und Auswertung von Interferenzbildern", Wolfgang Osten, Akademieverlag Berlin, 1991, S. 138 bis 144 und in "Proceedings of the First International Workshop on Automatic Processing of Fringe Patterns", Akademieverlag Berlin, 1989, S. 23 bis 31.

Wenn beispielsweise durch Störungen wie z.B. starke Vibrationen der Prüfvorrichtung, auf die Prüfvorrichtung scheinendes Sonnenlicht o.ä., die dem Bildsensorsystem zugeführte Strahlung inkohärent ist, führt die Modulo-2π-Bildverarbeitung zu einem Ausgangs-Grauwertbild, daß für eine weitere Verarbeitung unbrauchbar ist. Ein solches unbrauchbares Ausgangs-Grauwertbild mit marmorähnlichem Muster ist in Fig. 3 gezeigt.

Um auszuschließen, daß aufgrund dieses unbrauchbaren Ausgangs-Grauwertbildes ein Reifendefekt nicht erkannt wird, wird eine Fehlerprüfung durchgeführt.

Die Fehlerprüfung des Ausgangs-Grauwertbildes erfolgt so, daß das Ausgangs-Grauwertbild partiell differenziert wird, indem ein zweites, dem Ausgangs-Grauwertbild gleiches Grauwertbild erzeugt und gegenüber dem Ausgangs-Grauwertbild um ein oder zwei Pixel verschoben wird und danach eine subtraktive Überlagerung beider Grauwertbilder erfolgt.

Die sich aus der partiellen Differentiation des Ausgangs-Grauwertbildes ergebenden Bildwerte werden dahingehend untersucht, ob sie einen vorbestimmten Fehlerschwellwert überschreiten. Wenn ein Bildwert den vorbestimmten Fehlerschwellwert überschreitet, wird die weitere Verarbeitung abgebrochen und die vorangegangenen Verfahrensschritte erneut durchgeführt.

Wird keine Störung festgestellt, wird anschließend von einem schmalen kreisbogenförmigen Streifen des Ausgangs-Grauwertbildes, der einem schmalen kreisbogenförmigen Streifen 16 am Außenrand des Prüfbereichs 15 der Seitenwand 14 mit einer Breite S von beispielsweise 5 mm entspricht, in dem Rechner ein mittlerer Grauwert durch bekannte Methoden der Mittelwertbildung ermittelt. Dabei wird jedem Bildpunkt in dem Streifen des Ausgangs-Grauwertbildes ein bestimmter Grauwert aus einem Grauwertbereich von 0 (schwarz) und 255 (weiß) zugeordnet. Anschließend werden die Grauwerte aller Bildpunkte in dem schmalen Streifen addiert und die Summe durch die Anzahl der Bildpunkte geteilt.

Daraufhin wird in dem Rechner der so ermittelte mittlere Grauwert von einem vorher bestimmten Referenz-Grauwert, z.B. dem Grauwert 128 subtrahiert. Nun wird in dem Rechner der dem Ergebnis der Subtraktion entsprechende Grauwert, der auch negativ sein kann, zu den Grauwerten der einzelnen Bildpunkte des Ausgangs-Grauwertbildes addiert, wodurch ein Normierungs-Grauwertbild erhalten wird.

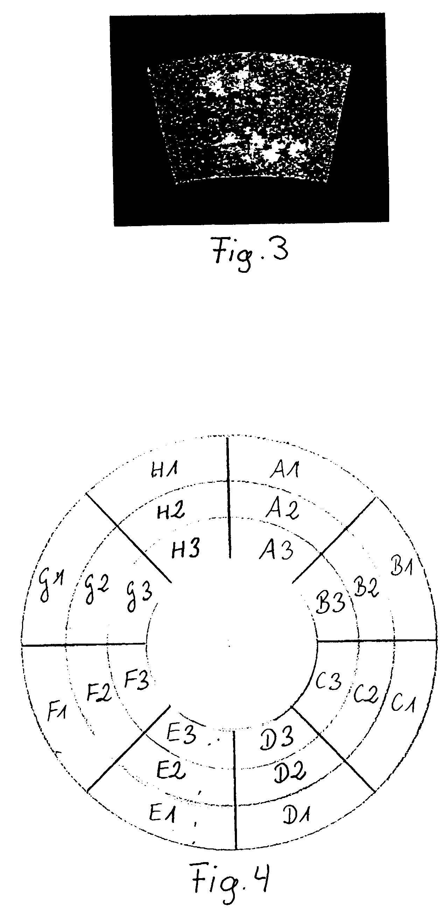

Nachdem für alle Torussegmente (acht in Fig. 6) ein Normierungs-Grauwertbild erzeugt wurde, wird jedes Torussegment der entsprechenden Seite des Reifens in radial übereinanderliegende Kreisringsegmente (drei in Fig. 6) A1, A2, A3; B1, B2, B3; ....; H1, H 2, H3 eingeteilt, wobei die radiale Segmentierung für jedes Torussegment in gleicher Weise erfolgt (siehe Fig. 6). Danach wird für jedes Kreisringsegment der Durchschnittsgrauwert des Normierungs-Grauwertbildes errechnet. Anschließend wird aus den Durchschnittsgrauwerten der auf einem Kreis liegendenden Kreisringsegmente A1 bis H1, A2 und H2, A3 und H3, jeweils ein Kreisringmittelwert gebildet.

Mit Hilfe der so erhaltenen Kreisringmittelwerte als Stützpunkten wird ein radiales Durchschnittsprofil oder Idealprofil erzeugt. Dieses radiale Durchschnittsprofil wird von den Normierungs-Grauwertbildern abgezogen, wodurch jeweilige Bewertungs-Grauwertbilder erhalten werden.

Wenn ein Wert der Bewertungs-Grauwertbilder bei Erkennung eines Reifendefekts einen vorgegebenen Schwellgrauwert überschreitet, kann beispielsweise durch den Rechner ein Signal abgegeben werden, das ein Hupsignal einer Hupvorrichtung oder ein optisches Signal einer optischen Anzeige auslöst, wodurch eine Bedienungsperson, die das erfindungsgemäße Verfahren durchführt, auf einfache Weise auf einen Reifendefekt hingewiesen werden kann. Nach Auslösung des Signals kann der ganze Vorgang abgebrochen werden, da der geprüfte LKW-Reifen für eine weitere Verarbeitung ungeeignet ist.

Durch die Ermittlung des radialen Durchschnittsprofils und dessen Subtraktion von den Normierungs-Grauwertbildern erhält man eine individuelle, selbstkonsistente Kalibrierung des Grauwertbildes. Dabei liegen die Überlegungen zugrunde, daß bei einem Reifen als toroidalsymmetrischem Gebilde ein einziges mittleres Radialprofil die "ideale" Deformation über den Reifenquerschnitt für den gesamten toroidalen Reifenumfang repräsentiert und daß gewöhnlich die von Defekten und Stößen eingenommene Fläche klein ist im Vergleich zur gesamten Reifenoberfläche.

Ausreichende Ergebnisse können bei der Bildung des radialen Durchschnttsprofils abhängig von den Umständen auch dann erzielt werden, wenn nur zwei Torussegmente herangezogen werden.

Abschließend sei noch angemerkt, daß die Einteilung des Reifens in acht Torussegmente mit jeweils drei Kreisringsegmenten für die Durchführung des Verfahrens nicht zwingend notwendig ist. Man kann den Reifen bzw. eine Reifenseite z.B. auch in eine andere geeignete Anzahl von Toruselementen, z.B. 16, einteilen.

Außerdem ist es ggf. ausreichend zur Bildung des Kreisringmittelwertes den Durchschnitt aller Grauwerte des jeweiligen Kreisringes oder eines Teils des Kreisringes zu ermitteln, anstatt wie beschrieben zunächst den Durchschnittsgrauwert jedes einzelnen Kreisringsegmentes zu ermitteln und aus den Durchschnittsgrauwerten der Kreisringsegmente eines Kreisringes den Kreisringmittelwert zu berechnen.

Die oben beschrieben Fehlererkennung kann sowohl bei einem Verfahren mit radialem Shearing, wie es z.B. aus der EP 0 823 623 A1 bekannt ist, als auch bei einem Verfahren mit tangentialem Shearing angewandt werden, wie es aus der DE 195 01 073 A1 bekannt ist. In beiden Fällen wird das Ausgangs-Grauwertbild auf Störungen untersucht.

Wenn, wie z.B. bei dem aus der DE 195 01 073 A1 bekannten Vefahren, bei der Weiterverarbeitung des Ausgangs-Grauwertbildes zu dem Bewertungs-Grauwertbild eine partielle Differentiation des Ausgangs-Grauwertbildes durchgeführt wird, ist vorzugsweise die Verschiebung des zweiten, dem Ausgangs-Grauwertbild gleichen Grauwertbildes bei der partiellen Differentiation des Ausgangs-Grauwertbildes zur Störungsuntersuchung nicht größer als bei der partiellen Differentiation des Ausgangs-Grauwertbildes, die zur Weiterverarbeitung des Ausgangs-Grauwertbildes zu dem Bewertungs-Grauwertbild durchgeführt wird.

## Patentansprüche

1. Verfahren zur Ermittlung der Strukturfestigkeit eines Prüfobjektes mit diffus streuender Oberfläche, bei dem
- das Prüfobjekt mit kohärentem Licht beleuchtet wird,
- die vom Prüfobjekt zurückgestreute Strahlung in einem Zweistrahl-Interferometer in zwei Teilstrahlungen aufgeteilt wird,
- in dem Zweistrahl-Interferometer die eine der beiden Teilstrahlungen gegen die andere Teilstrahlung verkippt wird (Shearing),
- in dem Zweistrahl-Interferometer eine der beiden Teilstrahlungen schrittweise phasenverschoben wird,
- die von dem Prüfobjekt zurückgestreute und in dem Zweistrahl-Interferometer in die zwei Teilstrahlungen aufgeteilte und wieder zusammengeführte Strahlung durch die Oberfläche des Prüfobjektes abbildende Komponenten einem elektronischen Bildsensorsystem zugeführt wird,
- die von dem Bildsensorsystem abgegebenen Signale digitalisiert und in einem Bildverarbeitungssystem zu einem Modulo-2π-Bild weiterverarbeitet werden,
- das Modulo-2π-Bild zu einem Ausgangs-Grauwertbild verstetigt wird und
- das Ausgangs-Grauwertbild zu einem in Bezug auf die Strukturfestigkeit des Prüfobjekts auswertbaren Bewertungs-Grauwertbild weiterverarbeitet wird,
dadurch gekennzeichnet, daß
- das Ausgangs-Grauwertbild vor seiner Weiterverarbeitung zum Bewertungs-Grauwertbild auf Anzeichen einer Störung untersucht wird, und
- bei Erkennung einer Störung die vorhergehenden Verfahrensschritte wiederholt werden.

2. Verfahren nach Anspruch 1, dadurch gekennzeichnet, daß zur Störungsuntersuchung
- das Ausgangs-Grauwertbild partiell differenziert wird,
- die sich aus der partiellen Differentiation des Ausgangs-Grauwertbildes ergebenden Bildwerte dahingehend untersucht werden, ob sie einen Fehlerschwellwert überschreiten, und
- eine Störung erkannt wird, wenn einer der Bildwerte den Fehlerschwellwert überschreitet.

3. Verfahren nach Anspruch 2, dadurch gekennzeichnet, daß die partielle Differentiation des Ausgangs-Grauwertbildes zur Störungsuntersuchung folgendermaßen durchgeführt wird:
- es wird ein zweites, dem Ausgangs-Grauwertbild gleiches Grauwertbild erzeugt und gegenüber dem Ausgangs-Grauwertbild verschoben,
- danach werden beide Grauwertbilder subtraktiv überlagert.

4. Verfahren nach Anspruch 3, bei dem im Schritt der Weiterverarbeitung des Ausgangs-Grauwertbildes zu dem Bewertungs-Grauwertbild eine partielle Differentiation des Ausgangs-Grauwertbildes durchgeführt wird, dadurch gekennzeichnet, daß
- die Verschiebung des zweiten, dem Ausgangs-Grauwertbild gleichen Grauwertbildes bei der partiellen Differentiation des Ausgangs-Grauwertbildes zur Störungsuntersuchung nicht größer ist als bei der partiellen Differentiation des Ausgangs-Grauwertbildes, die zur Weiterverarbeitung des Ausgangs-Grauwertbildes zu dem Bewertungs-Grauwertbild durchgeführt wird.

5. Verfahren nach Anspruch 2 oder Anspruch 3, dadurch gekennzeichnet, daß der Fehlerschwellwert einstellbar ist.
